# EUROPEAN PATENT SPECIFICATION

(11) **EP 1 847 149 B1**
(45) Date of publication and mention of the grant of the patent: **03.06.2009**
(21) Application number: 06708957.3
(22) Date of filing: 06.02.2006
(51) Int. Cl.: H04W 36/08

(54) **CELL RESELECTION IN CELLULAR-NETWORK-BASED PACKET COMMUNICATION**
ZELLENNEUAUSWAHL BEI DER PAKETKOMMUNIKATION IN EINEM ZELLULÄREN NETZWERK
NOUVELLE SELECTION DE CELLULE DANS UNE COMMUNICATION PAR PAQUETS DANS UN RESEAU CELLULAIRE

(30) Priority: 08.02.2005 FI 20055056
(43) Date of publication of application: 24.10.2007
(73) Proprietor: TELIASONERA AB, 10663 Stockholm (SE)
(72) Inventor: HUOVIALA, Rauno, FI-00530 Helsinki (FI)
(74) Representative: Smolander, Jouni Juhani
(86) International application number: PCT/FI2006/050053
(87) International publication number: WO 2006/084952

(56) References cited:
- EP-A- 0 480 896
- WO-A-99/65266
- WO-A-03/041430
- GB-A- 2 330 484
- US-B1- 6 725 052

## Description

### FIELD OF THE INVENTION

The present invention relates to data packet communication, and more particularly to cell reselection in cellular-network-based packet communication.

### BACKGROUND OF THE INVENTION

One special feature offered in mobile communications systems is group communication. Conventionally group communication has been available only in trunked mobile communications systems, such as Professional Radio or Private Mobile Radio (PMR) systems, such as TETRA (Terrestrial Trunked Radio), which are special radio systems primarily intended for professional and governmental users. Group communication is now becoming available also in public mobile communications systems. New packet-based group voice and data services are being developed for cellular networks, especially in GSM/GPRS/UMTS network evolution, wherein the approach is based on the idea of a group communication service being provided as a packet-based user or application level service so that the underlying cellular network only provides the basic connections (i.e. IP connections) between the group communications applications in the terminals and the group communication service. When this approach is employed in push-to-talk communication, the concept is also referred to as a push-to-talk over cellular (PoC) network.

Generally, in group voice communication with a "push-to-talk, release-to-listen" feature, a group call is based on the use of a pressel (PTT, push-to-talk switch) in a telephone as a switch: by pressing a PTT the user indicates his or her desire to speak, and the user equipment sends a service request to the network. The network either rejects the request or allocates the requested resources on the basis of predetermined criteria, such as the availability of resources, priority of the requesting user, etc. At the same time, a connection is established also to all other active users in the specific subscriber group. After the voice connection has been established, the requesting user may talk and the other users may listen on the channel. When the user releases the PTT, the user equipment signals a release message to the network, and the resources are released. Thus, the resources are reserved only for the actual speech transaction or speech item, instead of reserving the resources for a "call".

A problem in the PoC implementation is cell reselection of the user terminal during a group call, or more particularly during the transmission of a speech item. In a GPRS network, cell reselections typically occur constantly when the user terminal is moving. When the user terminal changes from a source cell to a target cell, there is evidently disconnection in the data transfer to and from the user terminal. PoC speech items are typically short, but very important to deliver, and if the cell reselection occurs during the transfer of a speech item, the speech item data is usually lost.

A cell reselection procedure can be carried out as a mobile assisted cell change (MACC) or a network assisted cell change (NACC). The NACC is more efficient in the sense that it minimizes the disconnection time of data transfer when the user terminal changes from the source cell to the target cell, typically to a few dozens of milliseconds, whereas in the MACC, the disconnection time may be several seconds, whereby the probability of losing a speech item is much higher.

However, the NACC is supported neither by all GPRS terminals nor by all GPRS networks. The NACC requires rather complex and standardized signalling procedure, and therefore not all terminal manufacturers and network operators are willing to implement it. Furthermore, the NACC has a negative impact on the network load because the data transmission to the source cell is also duplicated to the target cell until the actual data transmission responsibility has been handed over to the target cell.

Thus, a need exists for a simpler and generally applicable method for avoiding, or at least minimizing, interruption of a PoC speech item transfer. An equal need exists in any other application or service wherein it is desirable to avoid interruptions in packet data transmission due to a cell change.

WO 03/041430 discloses a method in a wireless packet data network, wherein completion of a handoff requiring transfer of service from one core network node to another core network node (a node accessed by a base station system) is delayed until reception of an acknowledgement from an associated wireless client for reception of packets. The packet data core network comprises a wireless content switch which causes a content source to temporarily stop transmitting additional packets when a need is detected to perform a handover for a wireless client requiring change of core network nodes (SGSNs), and already transmitted packets are transmitted to the wireless client. WO 03/041430 discloses a method for handovers involving change of core network elements, in the disclosed detailed embodiment between SGSNs in a GPRS network.

US 6 725 052 discloses a cell assignment method particularly for group calls. A cell assignment method prefers cells already involved in the group call session, i.e. the aim is to attempt handovers to or maintain connection in a cell already being used by some other terminal of the same group call. US 6 725 052 teaches that a handover may be entirely avoided if the current cell is desirable in view of locations of the other participants.

### BRIEF DESCRIPTION OF THE INVENTION

An improved method and an apparatus of implementing the method are now provided, which circumvent the above-stated drawback. Various aspects of the invention include a method and a subscriber device which are characterized by what is stated in the independent claims. Various embodiments of the invention are disclosed in the dependent claims.

The invention is based on the idea that in a user terminal of a cell u-lar network, said terminal including an application using a packet radio service of the cellular network as a bearer service, cell reselection is performed such that when the user terminal detects a need for a cell change, it is first checked if an active data packet transmission exists; and in response to detecting an active data packet transmission, the start of cell reselection is delayed such that the probability of a successful data packet transmission significantly increases.

According to an embodiment, the start of cell reselection is delayed by temporarily expanding allowable offset of a radio signal level between a serving cell and a target cell.

According to an embodiment, the start of cell reselection is delayed by temporarily disabling transmission of a message requesting a radio channel for a base transceiver station of a target cell.

According to an embodiment, a trigger parameter value measuring radio signal quality in relation to a predetermined cell reselection threshold value is monitored, and if a prevailing value of the trigger parameter is smaller than the threshold value, i.e. the signal is too weak, during an active data packet transmission, a cell reselection procedure is forced to be started.

According to an embodiment, said trigger parameter is implemented as a timer, which is started along with the delaying, whereby a cell reselection procedure is forced to be started when the timer expires.

According to an embodiment, the temporarily expanded allowable offset of a radio signal level between a serving cell and a target cell is re-modified back to a default value after the cell reselection has been started. In the case of a PoC speech item transmission, when transmission of an active PoC speech item has been completed, the temporarily expanded allowable offset of the radio signal level may be reset to the default value.

The invention and its embodiments provide various advantages. As regards the PoC service, a significant advantage of the invention is that in most cases, transmission disconnections and data losses are totally avoided in the PoC service during cell reselection. A further advantage is that the triggering procedure, even though in some rare cases it may cause the trigger to cut some of the PoC data packets, still ensures that the cell change is never delayed too long such that the signal strength of the serving cell would become too weak, and thus unnecessarily reduce the quality of service.

A still further advantage of the invention is that it can be implemented purely in the user terminal, as an application or a feature controlling the radio resource management RRM of the terminal, and thus it is invisible to the network. Accordingly, the invention does not require any standardized network operation or any complex implementation in network elements. Consequently, a further advantage is that it does not require any signalling between the user terminal and the network, whereby no extra signalling load is allocated to the network.

### BRIEF DESCRIPTION OF THE DRAWINGS

In the following, the invention will be described in greater detail by means of preferred embodiments and with reference to the attached drawings, in which
Figure 1 illustrates a general concept of a PoC network arrangement;
Figure 2 illustrates PoC network functions in more detail in connection with a GSM/GPRS network;
Figure 3 is a flow chart illustrating various embodiments of the invention; and
Figure 4 is a simplified block diagram of a subscriber device UT according to the invention.

### DETAILED DESCRIPTION OF THE INVENTION

The present invention is applicable to any packet-switched cellular network, and it is especially advantageous in cellular systems based on a GPRS type packet radio service. The invention is also applicable in systems wherein some data transfer, e.g. data transfer with a PoC communication system, is carried out via a circuit-switched connection. Preferred embodiments disclosed below are depicted using a PoC service carried over GPRS packet radio service of the GSM/UMTS systems as examples, without limiting the invention solely to these systems. Furthermore, Voice over IP (VoIP) is mentioned only as an example of IP-based voice communication methods applicable to the system.

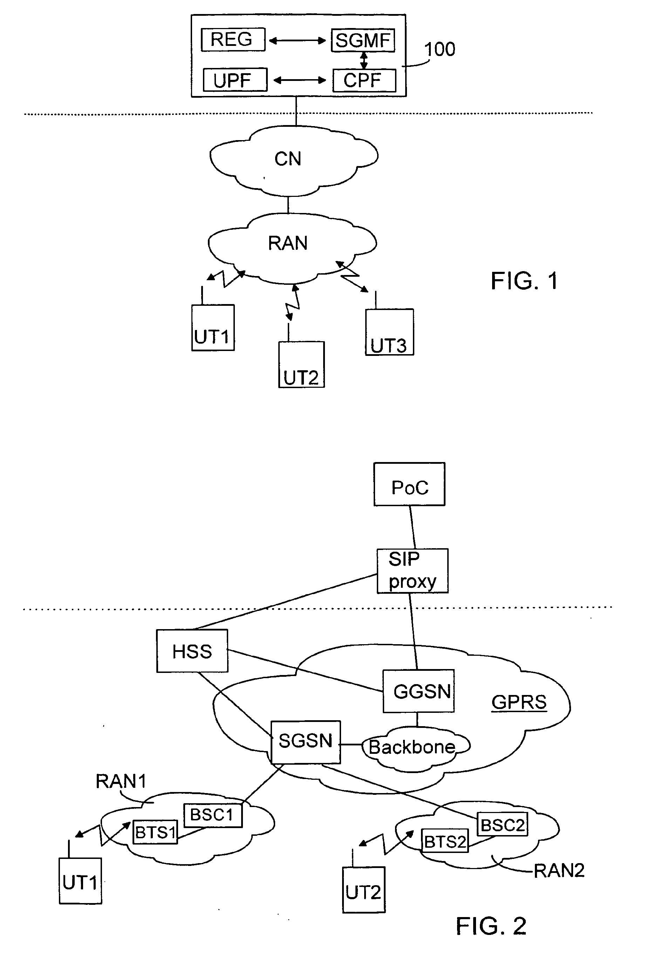

Figure 1 illustrates a general concept of a PoC network arrangement. In Figure 1, a packet based group communication system 100 having separated control-plane functions CPF and user-plane functions UPF is provided on top of the mobile network. The mobile network below comprises a core network CN and a radio access network RAN for offering a radio connection for the user terminals UT1 to UT3. The cellular network may be based on any second or third or further generation mobile network, such as a GSM/GPRS network or a UMTS (3GPP) network. The radio access network RAN can also be implemented as a wireless local area network WLAN. The type and structure of the wireless network beneath the PoC network arrangement is, however, irrelevant to the implementation of the PoC service, as far as a packet data connection is available for the wireless network via the wireless network. Thus, any packet-switched wireless network can be used as a bearer service for the PoC service.

The term "group", as used herein, refers to any logical group of two or more users for participating in the same group communication, e.g. a speech call. In PMR systems, the members of the communication group often belong to the same organization, but in public mobile communications systems, like the PoC service, also private persons can establish communication groups of their own. Naturally, the same user may be a member of more than one communication group.

The group communication system 100 may be embodied as a server system comprising one or more servers. Subscriber communication directed to the server system is typically routed via a proxy, since the PoC service does not usually enable peer-to-peer communication between terminals and server(s). Conceptually, the group communication server system may comprise control-plane functions CPF and user-plane functions UPF providing packet mode server applications which communicate with the group communication client application(s) in the user terminals UT over the IP connections provided by the communication system. This communication includes signalling packets and voice or data communication packets.

The user-plane function(s) UPF is responsible for distributing of the data or speech packets to the user terminals according to their group memberships and other settings. The UPF forwards traffic only between valid connections programmed by the CPF. In the case of speech communication, it may be based on a voice over IP (VoIP) protocol, and/or a Real-time Transport Protocol, (RTP). It should be appreciated that the user-plane operation relating to data or speech traffic is irrelevant to the present invention. However, the basic operation typically includes that all the data or speech packet traffic from a sending user is routed to the UPF which then delivers the packet traffic to all receiving users in the group, using a suitable technique, such as multicasting or multiple unicasting (multi-unicast).

The CPF function is responsible for control-plane management of the group communication. This may include, for example, managing user activity and creation and deletion of logical user-plane connections with an appropriate control protocol, such as Session Initiation Protocol SIP. The user may also perform group attachment and group detachment with the CPF using control signalling, e.g. the SIP protocol. The CPF also carries out user registration and authentication.

The group communication server system 100 may also include a subscriber and group management function (SGMF) for managing subscriber and group data. It may also provide specific tools and interfaces needed for subscriber and group provisioning. The system 100 may also include a register REG for storing all provisioned data in the group communication system.

The group communication server system 100 may further include a presence service (PresS) functionality, which may be provided on the infrastructure side by means of a presence server PS. The user terminals, in turn, comprise presence client applications. Typically, the presence service may be regarded as a home environment service, wherein the home environment manages presence information of users' devices, services and service media, even when roaming. The presence information is a set of attributes characterizing current properties of presence information providers, such as status or an optional communication address. The presence information of a ushers device may be delivered to other user devices within a communication group. Figure 2 illustrates the above-mentioned functions in more detail in connection with a GSM/GPRS network. Figure 2 shows only some of the network elements of a GSM/GPRS network. GSM/GPRS networks comprise a great number of other network elements as well, but the appreciation of the invention does not require these elements to be disclosed herein.

Only two radio access networks RAN1 and RAN2 of the GSM network are shown in Figure 2. Each radio access network comprises at least one base station controller BSC and typically several base transceiver stations BTS connected to each base station controller BSC, the base station controller BSC controlling radio frequencies and channels of each base transceiver station BTS connected to it. User terminals UT of the mobile network are connected to at least one base transceiver station BTS via a radio frequency channel.

Base station controllers BSC, in turn, are connected both to a circuit-switched (CS) GSM core network and to a packet-switched (PS) GPRS network, only the latter being disclosed herein in more detail. For a packet-switched connection, the BSC is further coupled to a Packet Control Unit (PCU). The PCU is coupled to a Serving GPRS Support Node (SGSN) via a Gb interface for providing a bearer path and a signalling interface between the PCU and the SGSN. When the PCU receives data packets intended for a user terminal UT, the PCU stores the received data in a user/BTS-specific buffer included in the PCU. The PCU then conveys the data to the user terminal UT by retrieving the stored data packets data from the buffer and conveying the data packets to the UT via the BSC and the source BTS. If the PCU has discarded any data packets intended for the user terminal UT, the PCU asks the SGSN to retransmit those packets.

In addition to the serving nodes SGSN, the GPRS packet radio system can comprise several gateway nodes GGSN (Gateway GPRS Support Node). Typically several serving nodes SGSN are connected to one gateway node GGSN. Both nodes SGSN and GGSN function as routers supporting the mobility of a mobile station, which routers control the mobile system and route data packets to mobile stations regardless of their location and the protocol used. The serving node SGSN is in contact with a user terminal UT through a radio network UTRAN. A task of the serving node SGSN is to detect mobile stations capable of packet radio connections in its service area, to transmit and receive data packets from said mobile stations and to track the location of the mobile stations in its service area. Records related to packet radio services and comprising subscriber-specific packet data protocol contents are also stored in a home subscriber server HSS.

The gateway node GGSN acts as a gateway between the GPRS packet radio system and an external data network PDN (Packet Data Network). External data networks include the UMTS or GPRS network of another network operator, the Internet, an X.25 network or a private local area network. The GGSN can also be connected directly to a private company network or to a host, like the PoC communication server system via the SIP proxy, as depicted in Fig. 2. Data packets transmitted between the gateway node GGSN and the serving node SGSN are always encapsulated according to the gateway tunnelling protocol GTP. The gateway node GGSN also contains PDP (Packet Data Protocol) addresses and routing information, i.e. SGSN addresses, of the mobile stations. The routing information is thus used to link the data packets between the external data network and the serving node SGSN. The network between the gateway node GGSN and the serving node SGSN employs an IP protocol (IPv4/IPv6, Internet Protocol, version 4/6).

Accordingly, the GSM/GPRS network, known as such, provides an IP-based communication infrastructure, on top of which the PoC service is implemented as data transfer between the PoC group communication server system and PoC client applications residing in the user terminals. The GGSN is connected to the PoC group communication server system via a SIP proxy, whereby the SIP proxy routes the VolP packets between the user terminals UT and the PoC group communication server system.

Now, when a user terminal UT operates and moves around in the mobile communication system, it may experience deterioration in radio frequency (RF) signal conditions or a network congestion condition with respect to the communication services provided by the first (i.e. the serving) base transceiver station BTS1. As a result, the UT may detect a need for cell reselection. A cell reselection procedure is typically started when at least one parameter measuring signal quality drops below a certain threshold value, i.e. either the radio signal is too weak or it includes a significant noise component. During cell reselection, the UT decides to abandon the first cell and move to a second (i.e. the neighboring or the target) cell served by a second base transceiver station BTS2.

Now, according to an embodiment of the invention, before establishing a radio link to the second base transceiver station BTS2 and sending a Cell Update message to SGSN, the user terminal, preferably the radio resource management (RRM) part in it, checks whether the PoC service is active and whether there is an active PoC speech item transmission either on the uplink (UL) or on the downlink (DL). If the user terminal UT observes that there is an active PoC speech item transmission, it modifies temporarily the threshold value triggering the cell reselection procedure to a lower value and thus delays cell change. When the allowable offset of a radio signal level between the serving cell and the target cell is expanded by several decibels (dB), the cell reselection procedure is not started yet and the active PoC speech item transmission can preferably be completed.

The cell change is preferably delayed until the PoC speech item has been successfully transmitted either on the uplink or on the downlink. Next, a Channel Request message can be transmitted to the second base transceiver station BTS2 and the cell reselection procedure can be started without any undesirable transmission disconnections and data losses in the PoC service.

However, a situation may occur wherein the active PoC speech item transmission lasts for a long time and/or the signal level of the radio link signal between the user terminal UT and the first base transceiver station BTS1 deteriorates very quickly. For such a situation, a trigger is preferably implemented in the user terminal, whereby the trigger forces the cell reselection procedure to start before the signal level of the first base transceiver station BTS1 becomes too weak. Accordingly, the operation of the trigger is enabled by a trigger parameter measuring the signal quality. The trigger parameter has also a certain (second) threshold value, and when the signal quality drops below this value, the trigger is activated. The trigger parameter threshold value is naturally a lower value than the above-mentioned threshold value starting the cell reselection procedure.

According to an embodiment, the trigger parameter can also be implemented as a timer. Accordingly, when the user terminal UT disables the transmission of a Channel Request message, the timer is started and regardless of the PoC speech item transmission being still active, when the timer expires, the timer enables the trigger to go off, and the cell reselection procedure is forced to start.

After the active PoC speech item transmission is completed or the trigger is forced to start the cell reselection procedure, the user terminal UT re-modifies the threshold value triggering the cell reselection procedure back to the default value.

According to an embodiment, the postponement of the cell reselection procedure does not necessarily require modification of the threshold values. Postponement can be carried out e.g. such that, upon detecting a need for a cell reselection, if the user terminal UT observes that there is an active PoC speech item transmission, it disables the transmission of a Channel Request message to the second base transceiver station BTS2 and thus delays the cell change. The start of the cell reselection procedure is delayed until the active PoC speech item transmission has been completed or the trigger is forced to start the procedure.

The procedure according to the embodiment of the invention can be referred to as "Delayed Cell Reselection for PoC", i.e. DCRP. As is evident from the above, the DCRP provides the significant advantage that, in most cases, the transmission disconnections and data losses are totally avoided in the PoC service. In some rare cases, the speech items may last long enough for a forced cell reselection procedure controlled by the trigger to cut a part of the PoC data packets, but the probability of such occurrence is very small. On the other hand, the triggering procedure ensures that the cell change is never delayed too long such that the signal strength of the serving cell would become too weak, and thus unnecessarily reduce the quality of service.

It is worth noticing that the DCRP can be implemented completely in the user terminal, as an application or a feature controlling the radio resource management RRM of the terminal, and thus it is invisible to the network. Accordingly, the DCRP does not require any standardized network operation or any complex implementation in the network elements. Consequently, the DCRP does not require any signalling between the user terminal and the network, whereby no extra signalling load is allocated to the network.

When the active PoC transfer has been finished or the cell reselection procedure has been forced to be started and the possibly modified threshold value has been reset as a default value, the cell reselection procedure may continue according to a prior known procedure. Accordingly, in a known mobile assisted cell change (MACC) procedure, the user terminal UT transmits a Channel Request message to the second base transceiver station BTS2 and establishes a wireless communication link with the BTS2. Upon transmitting the Channel Request message, the user terminal UT conveys a Cell Update message to an SGSN via the second base transceiver station BTS2. Based upon the Cell Update message, the SGSN detects that the user terminal UT has initiated cell reselection and conveys a FLUSH_LL message to the PCU, which flushes the user/BTS1-specific buffer. In addition, in response to receiving the FLUSH_LL message, the PCU instructs the first base transceiver station BTS1 to cease transmitting data to the user terminal UT and to terminate allocation of communication resources to the user terminal UT as well.

The PCU acknowledges the receipt of the FLUSH_LL message by conveying a FLUSH_LL_ACK message to the SGSN, which, in turn, retransmits any data packets conveyed to the PCU but not received by the user terminal UT, i.e. any data packets stored in the user/BTS1-specific buffer of the PCU and deleted pursuant to the FLUSH_LL message. The PCU then stores the retransmitted data packets in a user/BTS2-specific buffer for subsequent transmission to the user terminal UT via the BTS2.

The above described, prior known cell reselection procedure starting from the transmission of a Channel Request message to the second base transceiver station BTS2 is only an example of how the cell change may be completed, and it is, as such, out of the scope of the present invention. A skilled man appreciates that there are several ways to carry out the functions required by a mobile assisted cell reselection procedure, and the actual data transmission is always network-dependent.

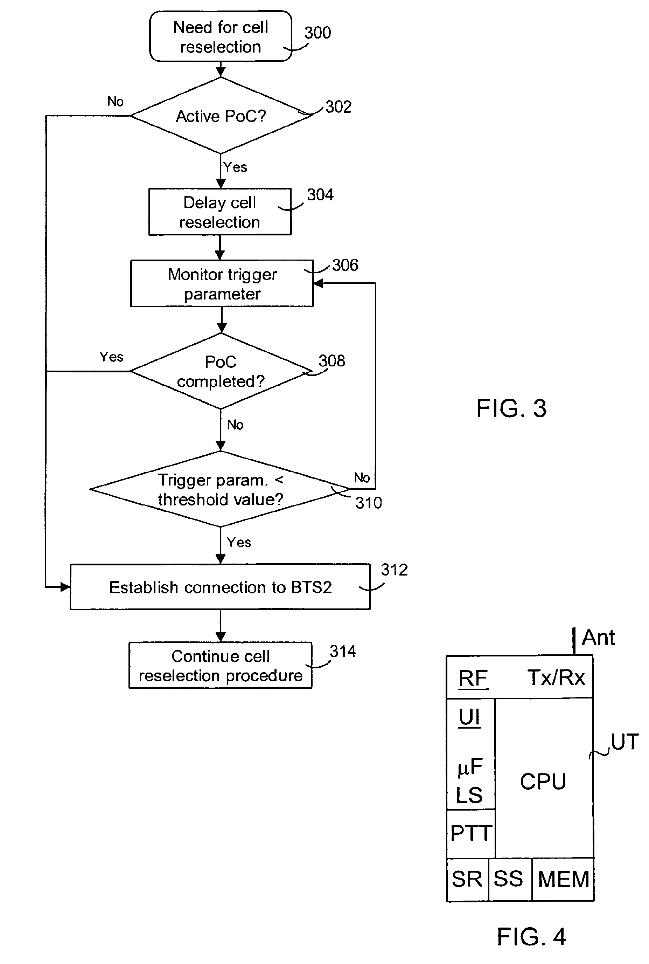

The steps of the DCRP are further illustrated by referring to the flow chart of Fig. 3. First, a user terminal UT detects a need for cell reselection (300), e.g. due to weak signal quality. Then, the user terminal UT checks whether there is an active PoC speech item transmission either on the uplink or on the downlink (302). If no active PoC speech item transmission is detected, the user terminal establishes a connection to base transceiver station of a target cell (312), for example by transmitting a Channel Request message to the BTS2. However, if the user terminal UT detects an active PoC speech item transmission, it delays cell change (304), for example, by expanding the allowable radio signal offset level or by disabling the transmission of a Channel Request message.

When the cell change delay has been set, the user terminal UT starts to continuously monitor (306) a trigger parameter measuring the signal quality in relation to a threshold value forcing the cell reselection procedure to start. The user terminal UT also continuously checks whether the active PoC speech item transmission has been completed (308). If no active PoC speech item transmission exists any longer, the user terminal can establish a connection to the base transceiver station of the target cell (312). However, if the user terminal UT detects that the PoC speech item transmission is still active, the user terminal UT checks whether the prevailing trigger parameter value of the signal quality is below the threshold value forcing the cell reselection procedure to start (310). If the prevailing trigger parameter value is smaller than the threshold value, i.e. the signal has become too weak, the cell reselection procedure is forced to start, and the user terminal establishes a connection to the base transceiver station of the target cell (312). Again, if the prevailing trigger parameter value is still greater than the threshold value, the user terminal continues to monitor (306) the trigger parameter value.

Accordingly, the above procedure is carried out and looped, if necessary, until the possible active PoC speech item transmission has been completed or the cell reselection procedure is forced to start. If the cell resection procedure has been delayed by expanding the allowable radio signal offset level, the offset value can thereafter be reset to the default value. Then the cell reselection procedure is continued (314), for example as explained above.

After the transmission of the active PoC speech item has been completed, the signal quality may have improved, in which case the cell reselection procedure may not be needed at all. In one embodiment, before current step 312, there may be an additional checking step for determining if cell reselection procedure is required after the completion of the PoC speech item transfer. If the signal quality is still weak, the procedure may continue to current step 312. Alternatively, if the signal quality no longer necessitates cell reselection, cell reselection is cancelled. By this embodiment it is possible to avoid cell changes caused by short-term signal quality deteriorations.

The invention has been explained using the PoC service an example. A skilled man appreciates that the basic idea of the invention, i.e. delayed cell change, is applicable to any other application or service wherein it is desirable to avoid interruptions in packet data transmission due to cell change. Examples of such applications include various multimedia streaming applications wherein e.g. audio and video files are transmitted and the recipient begins the data playback already before all the data to be transmitted has been received. Since data transmission and playback are preferably as real-time as possible, the streaming applications do not usually provide any feedback channel to inform about lost or corrupted data packets. Therefore, also in streaming applications, it is of vital importance that a cell reselection procedure causes as few interruptions in the packet data transmission as possible. The delayed cell change is applicable to any jittering sensitive service or service using RTP/UDP (real-time transport protocol/user datagram protocol) transmission. Some further examples of such services include VoIP (voice over internet protocol), video sharing, and video telephony.

An example of a possible implementation of a subscriber device UT is illustrated in a simplified block diagram shown in Figure 4. The subscriber device UT comprises an RF part including a transceiver Tx/Rx for arranging radio frequency communication via an antenna ANT with a base transceiver station BTS of the network. User interface means UI typically comprise a display, a keyboard, a microphone (µF) and a loudspeaker (LS). The subscriber device UT further comprises a memory MEM for storing computer program code to be executed by a central processing unit CPU. A speech item requests of a PoC service are controlled by a switch PTT (pressel), which can also be implemented as VAD (Voice Activity Detection).

For implementing the present invention, the subscriber device UT preferably comprises means for establishing a packet-switched connection via the cellular communications system; an application using said packet-switched connection of the cellular network as a bearer service; means for detecting a need for cell change; means for checking whether an active data packet transmission exists in said application; and means for delaying the start of cell reselection such that a probability of a successful data packet transmission increases.

It should be appreciated that the blocks illustrated in Figure 4 are functional blocks that can be implemented in a variety of different circuit configurations. For example, the functions of the CPU may be distributed among a plurality of units. The operation according to the present invention is primarily related to the CPU part of the UT, and the basic invention may be implemented as program modifications in the control program of the UT, for example. The invention is preferably implemented as a program modification to the radio resource management RRM system of the user terminal, either directly or as a separate program controlling the operation of the RRM. The RRM is a program-implemented signalling protocol entity, which controls radio resource management on a radio bearer between a user terminal UT and base transceiver stations BTS.

It should also be appreciated that the present invention is not intended to be restricted to mobile stations and mobile systems but the terminal can be any terminal having a speech communication capability. For example, the user terminal may be a terminal (such as a personal computer PC) having Internet access and a VoIP capability for voice communication over the Internet.

It will be obvious to a person skilled in the art that as technology advances, the inventive concept can be implemented in various ways. The invention and its embodiments are not limited to the examples described above but may vary within the scope of the claims.

## Claims

1. A method of performing cell reselection in a user terminal of a cellular network, the user terminal including an application using a packet radio service of the cellular network as a bearer service, the method comprising:
detecting (300) a need for a cell change, **characterized in that** the need for a cell change is detected in said user terminal, the method further comprising:
checking (302) if an active data packet transmission exists; and
in response to detecting an active data packet transmission, delaying (304) the start of cell reselection such that the probability of a successful data packet transmission increases, wherein transmission of a message requesting a radio channel for a base transceiver station of a target cell is delayed in the user terminal.

2. A method according to claim 1, **characterized by**
delaying the start of cell reselection by temporarily expanding allowable offset of a radio signal level between a serving cell and a target cell.

3. A method according to claim 1, **characterized by**
delaying the start of cell reselection by temporarily disabling transmission of a message requesting a radio channel for a base transceiver station of a target cell.

4. A method according to any one of the preceding claims, **characterized by**
monitoring (306) a trigger parameter value measuring radio signal quality in relation to a predetermined cell reselection threshold value; and
in response to a prevailing value of the trigger parameter being smaller than the threshold value during an active data packet transmission, forcing a cell reselection procedure to start.

5. A method according to claim 4, **characterized in that**
said trigger parameter is implemented as a timer, which is started along with the delaying, whereby the cell reselection procedure is forced to be started when the timer expires.

6. A method according to claim 2, **characterized by**
re-modifying the temporarily expanded allowable offset of a radio signal level between a serving cell and a target cell back to a default value after the cell reselection has been started.

7. A method according to any one of the preceding claims, **characterized in that**
said application using a packet radio service of the cellular network as a bearer service is a push-to-talk-over-cellular (PoC) service.

8. A subscriber device for a cellular communication system, comprising
means for establishing a packet-switched connection via the cellular communications system;
an application using said packet-switched connection of the cellular network as a bearer service; **characterized by** further comprising
means for detecting (300) a need for a cell change,
means for checking (302) if an active data packet transmission exists; and
means for delaying (304) the start of cell reselection such that the probability of a successful data packet transmission increases, wherein transmission of a message requesting a radio channel for a base transceiver station of a target cell is arranged to be delayed in the user terminal.

9. A subscriber device according to claim 8, **characterized in that**
said means for delaying the start of cell reselection are arranged to temporarily expand allowable offset of a radio signal level between a serving cell and a target cell.

10. A subscriber device according to claim 8, **characterized by**
said means for delaying the start of cell reselection are arranged to temporarily disable transmission of a message requesting a radio channel for a base transceiver station of a target cell.

11. A subscriber device according to any one of claims 8 to 10, **characterized by** further comprising
means for monitoring (306) a trigger parameter value measuring radio signal quality in relation to a predetermined cell reselection threshold value; and
means for forcing a cell reselection procedure to start during an active data packet transmission if a prevailing value of the trigger parameter becomes smaller than the threshold value.

12. A subscriber device according to claim 11, **characterized in that**
said trigger parameter is implemented as a timer, which is arranged to be started along with the delaying, whereby the means for forcing the cell reselection procedure to start are activated when the timer expires.

13. A subscriber device according to claim 9, **characterized in that**
said means for delaying the start of cell reselection are arranged to re-modify the temporarily expanded allowable offset of a radio signal level between a serving cell and a target cell back to a default value after the cell reselection has been started.

14. A subscriber device according to any one of claims 8 to 13, **characterized in that**
said means are implemented as a computer program arranged in a functional connection with a radio resource management (RRM) entity of the subscriber device.

15. A subscriber device according to any one of claims 8 to 14, **characterized in that**
said application using a packet radio service of the cellular network as a bearer service is a push-to-talk-over-cellular (PoC) service.

## Patentansprüche

1. Verfahren zur Zellenneuauswahl in einer Benutzerstation eines zellulären Netzwerks, wobei die Benutzerstation eine Anwendung umfasst, die einen Paketfunkdienst des zellularen Netzwerks als Netzdienst verwendet, aufweisend:
Detektieren (300) eines Bedarfs für einen Zellenwechsel, **dadurch gekennzeichnet , dass** der Bedarf für einen Zellenwechsel in der besagten Benutzerstation detektiert wird, wobei das Verfahren ferner aufweist:
Prüfen (302), ob eine aktive Datenpaketübertragung besteht; und,
als Antwort auf Detektieren einer aktiven Datenpaketübertragung, Verzögern (304) des Anfangs von Zellenneuauswahl, so dass sich die Wahrscheinlichkeit einer erfolgreichen Datenpaketübertragung erhöht, wobei Übertragung einer einen Funkkanal anfordernden Nachricht an eine Basisstation einer Zielzelle in der Benutzerstation verzögert wird.

2. Verfahren nach Anspruch 1, **gekennzeichnet durch**
Verzögern des Anfangs von Zellenneuauswahl, indem ein zulässiger Offset eines Funksignalpegels zwischen einer versorgenden Zelle und einer Zielzelle vorübergehend vergrößert wird.

3. Verfahren nach Anspruch 1, **gekennzeichnet durch**
Verzögern des Anfangs von Zellenneuauswahl, indem Übertragung einer einen Funkkanal anfordernden Nachricht an eine Basisstation einer Zielzelle vorübergehend deaktiviert wird.

4. Verfahren nach einem der vorhergehenden Ansprüche, **gekennzeichnet durch**
Überwachen (306) eines die Qualität des Funksignals messenden Auslöseparameterwerts in Bezug auf einen vorbestimmten Grenzwert für Zellenneuauswahl; und
als Antwort darauf, dass ein aktueller Wert für den Auslöseparameter kleiner als der Grenzwert während einer aktiven Datenpaketübertragung ist, Zwingen einer Zellenneuauswahlprozedur zum Starten.

5. Verfahren nach Anspruch 4, **dadurch gekennzeichnet, dass**
der besagte Auslöseparameter als Timer implementiert wird, der zusammen mit der Verzögerung gestartet wird, wobei die Zellenneuauswahlprozedur zum Starten gezwungen wird, wenn der Timer abgelaufen ist.

6. Verfahren nach Anspruch 2, **gekennzeichnet durch**
Wiedermodifizieren des vorübergehend vergrößerten zulässigen Offsets eines Funksignalpegels zwischen einer versorgenden Zelle und einer Zielzelle zurück auf einen Defaultwert, nachdem die Zellenneuauswahl gestartet worden ist.

7. Verfahren nach einem der vorhergehenden Ansprüche, **dadurch gekennzeichnet, dass**
die besagte, einen Paketfunkdienst des zellulären Netzwerks als Netzdienst verwendende Anwendung ein push-to-talk-over-cellular-Dienst (PoC) ist.

8. Teilnehmergerät für ein zellulares Kommunikationssystem, aufweisend
Mittel zur Herstellung einer paketvermittelten Verbindung über das zellulare Kommunikationssystem;
eine Anwendung, die die besagte paketvermittelte Verbindung des zellularen Netzwerks als Netzdienst verwendet, **dadurch gekennzeichnet, dass** es ferner aufweist:
Mittel zum Detektieren (300) eines Bedarfs für einen Zellenwechsel,
Mittel zum Prüfen (302), falls eine aktive Datenpaketübertragung besteht; und
Mittel zum Verzögern (304) des Anfangs von Zellenneuauswahl, so dass sich die Wahrscheinlichkeit einer erfolgreichen Datenpaketübertragung erhöht, wobei Übertragung einer einen Funkkanal anfordernden Nachricht an eine Basisstation einer Zielzelle vorgesehen ist, in der Benutzerstation verzögert zu werden.

9. Teilnehmergerät nach Anspruch 8, **dadurch gekennzeichnet, dass**
die besagten Mittel zum Verzögern des Anfangs von Zellenneuauswahl vorgesehen sind, einen zulässigen Offset eines Funksignalpegels zwischen einer versorgenden Zelle und einer Zielzelle vorübergehend zu vergrößern.

10. Teilnehmergerät nach Anspruch 8, **dadurch gekennzeichnet, dass**
die besagten Mittel zum Verzögern des Anfangs von Zellenneuauswahl vorgesehen sind, Übertragung einer einen Funkkanal anfordernden Nachricht an eine Basisstation einer Zielzelle vorübergehend zu deaktivieren.

11. Teilnehmergerät nach einem der Ansprüche 8 bis 10, **dadurch gekennzeichnet, dass** es ferner
Mittel zum Überwachen (306) eines die Qualität des Funksignals messenden Auslöseparameterwerts in Bezug auf einen vorbestimmten Grenzwert für Zellenneuauswahl; und
Mittel zum Zwingen einer Zellenneuauswahlprozedur zum Starten während einer aktiven Datenpaketübertragung, falls ein aktueller Wert für den Auslöseparameter kleiner als der Grenzwert wird, aufweist.

12. Teilnehmergerät nach Anspruch 11, **dadurch gekennzeichnet, dass**
der besagte Auslöseparameter als Timer implementiert wird, der vorgesehen ist, zusammen mit der Verzögerung gestartet zu werden, wobei die Mittel zum Zwingen der Zellenneuauswahlprozedur zum Starten aktiviert werden, wenn der Timer abgelaufen ist.

13. Teilnehmergerät nach Anspruch 9, **dadurch gekennzeichnet, dass**
die besagten Mittel zum Verzögern des Anfangs von Zellenneuauswahl vorgesehen sind, den vorübergehend vergrößerten zulässigen Offset eines Funksignalpegels zwischen einer versorgenden Zelle und einer Zielzelle zurück auf einen Defaultwert wiederzumodifizieren, nachdem die Zellenneuauswahl gestartet worden ist.

14. Teilnehmergerät nach einem der Ansprüche 8 bis 13, **dadurch gekennzeichnet, dass**
die besagten Mittel als Computerprogramm implementiert sind, das in funktionaler Verbindung mit einer Funkressourcenverwaltungseinheit (RRM) des Teilnehmergeräts angeordnet ist.

15. Teilnehmergerät nach einem der Ansprüche 8 bis 14, **dadurch gekennzeichnet, dass**
die besagte, einen Paketfunkdienst des zellulären Netzwerks als Netzdienst verwendende Anwendung ein push-to-talk-over-cellular-Dienst (PoC) ist.

## Revendications

1. Procédé d'exécution d'une resélection de cellule dans un terminal d'utilisateur d'un réseau cellulaire, le terminal d'utilisateur comprenant une application qui utilise un service de radiocommunication par paquets du réseau cellulaire en tant que service support, le procédé comprenant l'étape consistant à :
détecter (300) un besoin de changement de cellule, **caractérisé en ce que** le besoin de changement de cellule est détecté dans ledit terminal d'utilisateur, le procédé comprenant en outre les étapes consistant à :
vérifier (302) l'existence d'une transmission de paquets de données active ; et
en réponse à la détection d'une transmission de paquet de données active, retarder (304) le début de la resélection de cellule de telle sorte que la probabilité d'une transmission de paquets de données réussie augmente, dans lequel la transmission d'un message demandant un canal radio d'une station émetteur récepteur de base d'une cellule cible, est retardée dans le terminal d'utilisateur.

2. Procédé selon la revendication 1, **caractérisé par** l'étape consistant à :
Retarder le début d'une resélection de cellule en augmentant de manière temporaire le décalage admissible d'un niveau de signal radio entre une cellule de desserte et une cellule cible.

3. Procédé selon la revendication 1, **caractérisé par** l'étape consistant à :
Retarder le début d'une resélection de cellule en invalidant de manière temporaire la transmission d'un message demandant un canal radio d'une station émetteur récepteur de base d'une cellule cible.

4. Procédé selon l'une quelconque des revendications précédentes, **caractérisé par** les étapes consistant à :
surveiller (306) une valeur de paramètre de déclenchement qui mesure la qualité du signal radio par rapport à une valeur de seuil de resélection de cellule prédéterminée ; et
en réponse à une valeur actuelle du paramètre de déclenchement inférieure à la valeur de seuil au cours d'une transmission de paquet de données active, forcer le début d'une procédure de resélection de cellule.

5. Procédé selon la revendication 4, **caractérisé en ce que** :
ledit paramètre de déclenchement est mis en application sous la forme d'un temporisateur, qui est déclenché avec le retard, grâce à quoi la procédure de resélection de cellule est forcée de débuter lorsque le temporisateur a mis fin à son action.

6. Procédé selon la revendication 2, **caractérisé par** l'étape consistant à :
remodifier le décalage admissible augmenté de manière temporaire d'un niveau de signal radio entre une cellule de desserte et une cellule cible, de nouveau à une valeur par défaut après le début de la resélection de cellule.

7. Procédé selon l'une quelconque des revendications précédentes, **caractérisé par le fait que** :
ladite application qui utilise un service de radiocommunication par paquets du réseau cellulaire en tant que service support, est un service de messagerie vocale instantanée (ou PoC, acronyme de « Push to talk over Cellular »).

8. Dispositif d'abonné pour un système de communication cellulaire, comprenant :
des moyens destinés à établir une connexion à commutation par paquets par l'intermédiaire du système de communications cellulaire ;
une application qui utilise ladite connexion à commutation par paquets du réseau cellulaire en tant que service support ; **caractérisé par le fait qu'**il comprend en outre :
des moyens destinés à détecter (300) un besoin de changement de cellule ;
des moyens destinés à vérifier (302) l'existence d'une transmission de paquets de données active ; et
des moyens destinés à retarder (304) le début de la resélection de cellule de telle sorte que la probabilité d'une transmission de paquets de données réussie augmente, dans lequel la transmission d'un message demandant un canal radio d'une station émetteur récepteur de base d'une cellule cible, est agencée de manière à être retardée dans le terminal d'utilisateur.

9. Dispositif d'abonné selon la revendication 8, **caractérisé en ce que** :
lesdits moyens destinés à retarder le début d'une resélection de cellule sont agencés de façon à augmenter de manière temporaire le décalage admissible d'un niveau de signal radio entre une cellule de desserte et une cellule cible.

10. Dispositif d'abonné selon la revendication 8, **caractérisé par le fait que** :
lesdits moyens destinés à retarder le début d'une resélection de cellule sont agencés de façon à invalider de manière temporaire la transmission d'un message demandant un canal radio d'une station émetteur récepteur de base d'une cellule cible.

11. Dispositif d'abonné selon l'une quelconque des revendications 8 à 10, **caractérisé par le fait qu'**il comprend en outre :
des moyens destinés à surveiller (306) une valeur de paramètre de déclenchement qui mesure la qualité du signal radio par rapport à une valeur de seuil de resélection de cellule prédéterminée ; et
des moyens destinés à forcer le démarrage d'une procédure de resélection de cellule au cours d'une transmission de paquet de données active si une valeur actuelle du paramètre de déclenchement devient inférieure à la valeur de seuil.

12. Dispositif d'abonné selon la revendication 11, **caractérisé en ce que** :
ledit paramètre de déclenchement est mis en application sous la forme d'un temporisateur, qui est agencé de manière à être déclenché avec le retard, grâce à quoi les moyens destinés à forcer le début de la procédure de resélection de cellule, sont activés lorsque le temporisateur a mis fin à son action.

13. Dispositif d'abonné selon la revendication 9, **caractérisé en ce que** :
lesdits moyens destinés à retarder le début d'une resélection de cellule, sont agencés de manière à remodifier le décalage admissible augmenté de manière temporaire d'un niveau de signal radio entre une cellule de desserte et une cellule cible, de nouveau à une valeur par défaut après le début de la resélection de cellule.

14. Dispositif d'abonné selon l'une quelconque des revendications 8 à 13,
**caractérisé en ce que** :
lesdits moyens sont mis en application sous la forme d'un programme informatique disposé dans une connexion fonctionnelle avec une entité de gestion de ressources radio (ou RRM, acronyme de « Radio Resource Management ») du dispositif d'abonné.

15. Dispositif d'abonné selon l'une quelconque des revendications 8 à 14,
**caractérisé en ce que** :
ladite application qui utilise un service de radiocommunication par paquets du réseau cellulaire en tant que service support, est un service de messagerie vocale instantanée (PoC).
